# EUROPEAN PATENT APPLICATION

(11) **EP 0 598 245 A1**
(43) Date of publication of application: **25.05.1994**
(21) Application number: 93117128.4
(22) Date of filing: 22.10.1993
(51) Int. Cl.: G03B 17/36, G03B 1/66

(54) **Camera film metering sensor apparatus**

(30) Priority: 19.11.1992 US 979500
(71) Applicant: EASTMAN KODAK COMPANY, Rochester, New York 14650-2201 (US)
(72) Inventor: Dwyer, Patricia A., Rochester New York 14650-2201 (US)
(74) Representative: Blickle, K. Werner, Dipl.-Ing.

(57) **Abstract**

In a photographic film camera, film velocity is metered by encoder wheel apparatus (62) mounted coaxially with and rotatable with a film pressure roller (44) provided in the film take-up chamber of the camera.

## Description

### FIELD OF THE INVENTION

This invention relates to the field of photographic film cameras and more specifically to apparatus for metering film travel in such cameras.

### BACKGROUND

Cameras with motorized film drive and provided with encoder wheels to measure film travel, either position or velocity, are known. As an example, U.S. Patent 4,482,227 - Shiozawa discloses an encoder wheel driven from a sprocketed film follower roller through a multi-gear gear train. The frequency of the pulse train produced from the encoder wheel output provides a measure of film velocity which is used to estimate the amount of film overrun (coasting) that will occur when the film drive motor is turned-off. This information is then used to assure accurate positioning of successive film image frame areas in the camera film gate. In U.S Patent 4,437,742 - Taniguchi, an encoder wheel is mounted at the end of a film sprocket follower with pulse generating segments on the wheel aligned with sprockets on the follower. The pulses are used as a count of film sprocket holes as the film passes over the follower. Counting of the film sprockets is used to as a frame counter (8 holes per frame) in positioning the frame in the film gate and in determining when the end of roll is reached to initiate film rewind. Both of these arrangement are limited to the use of film having sprocket holes uniformly distributed along the film and the '227 patent has the further disadvantage of requiring the use of a costly and spaced consuming gear train.

More recently, it has been proposed to use photographic film that limits the sprocket holes along the length of film to holes spaced apart by the distance of one image frame area so that the sprocket holes inherently indicate frame positioning without the need to count any intervening sprocket holes. Additionally, it has been proposed to provide such film with a magnetic coating on which data can be magnetically recorded in the camera. Such data might include frame exposure conditions, time/date and frame number, as examples. Recording of magnetic data on camera film and subsequent readback of such data is made difficult by the fact that the film velocity varies dramatically during film operation, particularly during frame-to-frame advance. While relatively sophisticated self clocking encoding can make the recording and readback somewhat independent of reasonable variations in velocity, such encoding schemes are unable to deal with the extremes of film velocity variation (acceleration and deceleration) that can occur in frame advance operation. Moreover, for lower cost cameras, it has been proposed to provide more robust operation by recording data segments repetitively within the length of the frame region to which the data relates. The requires that the recording rate be varied with film velocity to assure that the bit density in the recorded data region remains relatively constant so as to assure the necessary number of repetitive data segments within the allotted data region. Consequently, some means must be provided to sense film velocity which becomes a problem for film in which sprocket holes do not exist in the frame regions where it is desired to do the data recording. It has been proposed to use an auxiliary rubber wheel in the area of the film gate as an encoder wheel for this purpose. While such an arrangement is useful for the purpose, it requires the addition of parts to the camera and also requires that space be provided to accommodate the added wheel. Particularly for lower cost cameras, such an arrangement becomes undesirable.

It is therefore an object of the invention to provide a simple and inexpensive arrangement for sensing film travel in a camera and, in particular for a camera adapted for use with film that does not have sprocket holes distributed along the length of each film frame area.

It is a further object of the invention to provide a film travel sensor of that does not require the addition of complex gear drive trains and does not take up space in the film gate area of the camera.

### SUMMARY OF THE INVENTION

Thus in accordance with the invention, there is provided an improvement in a photographic film camera of the type having a film gate, a motorized film drive, a film take-up spool and a biased pressure roller for pressing film against the take-up spool as film is wound and unwound on the spool, wherein the improvement comprises a film velocity encoder wheel which is integrally mounted coaxially with the pressure roller and is rotatable therewith. In one preferred embodiment, the improvement of the invention further comprises electronic means responsive to the encoder wheel for providing an output signal representative of film velocity in the film gate during winding and unwinding of the film on the take-up spool. In another preferred embodiment, the improvement further comprises means for magnetically recording data on a magnetic recording layer disposed on the film and means responsive to the encoder wheel output signal for disabling the data recording when the film velocity is below a predetermined value.

### BRIEF DESCRIPTION OF THE DRAWINGS

In the drawings:
Fig. 1 is a section view from the top of a camera schematically illustrating the present invention.
Fig. 2 is a perspective view of a portion of a camera showing an embodiment of the present invention.
Fig. 3 is a perspective view of a portion of a camera showing an alternative embodiment of the present invention.

### DETAILED DESCRIPTION

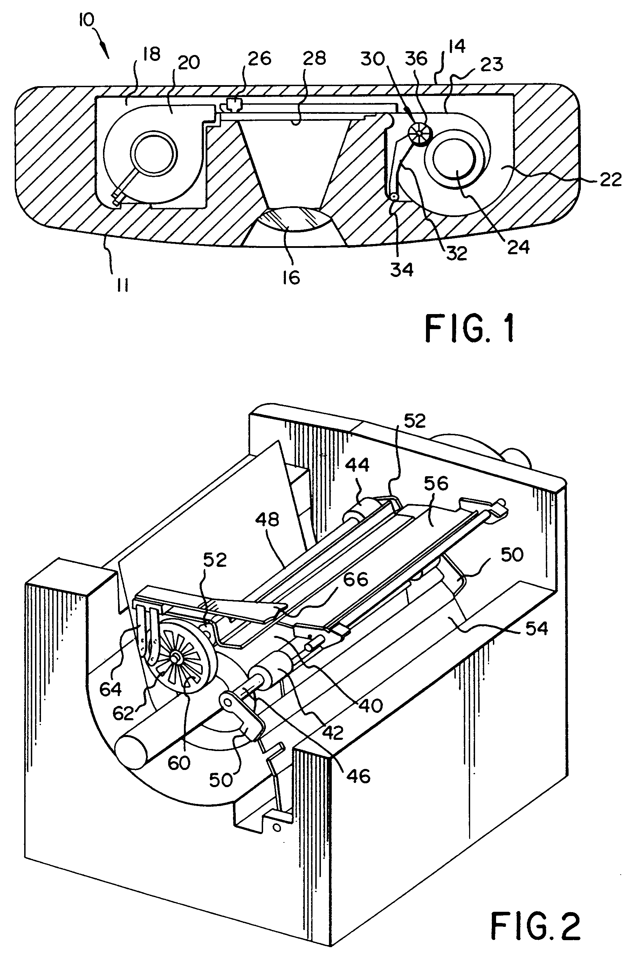

Referring to Fig. 1, there is shown a camera 10 having a main body 11, a hinged back 14, a taking lens 16, a cartridge chamber 18 for receiving a film cartridge 20 and a film take-up chamber 22 for receiving film 23 onto a take-up spool 24 rotatably supported in the chamber 22. In well known manner, a film drive motor (not shown) is drivingly coupled to either or both of the film cartridge spool and the film take-up spool to advance the film 23 forward from the cartridge to the take-up spool and in reverse during film rewind back into the cartridge. In a "normal wind" camera, the film is advanced in the forward direction until the first available film image frame area is positioned in film gate 28. Thereafter, the film is advanced frame-by-frame for each exposure. Alternatively, in a "prewind" camera, the film is first fully extracted from the cartridge and wound up on the take-up spool 24. Thereafter, the film is rewound frame-by-frame for each exposure. For magnetic recording of data on a magnetic layer on the film strip 30, a magnetic recording head 26 is mounted on the camera back adjacent to a film gate 28. Typically, the data would be recorded in a track adjacent the related exposed image frame and would be accomplished after each exposure during movement of the film to the next successive image frame area. Thus, recording head 26 would be mounted to the left of the film gate as shown in Fig. 1 for a prewind camera and to the right of the film gate for a normal wind camera.

Within the take-up chamber 22, a film pressure roller 30 is rotatably supported at one end of a spring loaded cantilever arm 32 which is pivotally mounted to the camera body 11 at 34. In accordance with the present invention, pressure roller 30 is provided with detectable indicia 36 disposed coaxially with the pressure roller and rotatable therewith to form thereby a film velocity encoder wheel. Indicia 36 may comprise alternating dark and light radial spokes that are capable of being detected by an optical sensor. Alternatively, indicia 36 may comprise alternating conductive and non-conductive radial spokes detectable by electrical contact sensors. The indicia may also be formed on the periphery of the pressure roller rather than being formed as radial spokes.

In Fig. 2, a portion of a film camera take up spool chamber is shown to illustrate a modification of the encoder wheel arrangement of the invention. In this illustration, the chamber is provided with a take up spool 40 and first and second film pressure rollers 42 and 44. Rollers 42 and 44 are mounted on axles 46 and 48 journalled respectively in brackets 50 and 52 formed at the outer ends of spring loaded cantilever arms 54 and 56, respectively. A film encoder wheel 62 is mounted on the end of axle 48 so as to be coaxial and rotatable with pressure roller 44. The encoder wheel is provided with detectable indicia 62 comprised of alternating conductive and non-conductive radial spokes in a manner similar to the showing of Fig. 1. A pair of electrically conductive fingers 64 coupled to electronic circuits (not shown) in the camera via a flexible wiring board 66 and serve as switch contacts responsive to the conductive/non-conductive spokes on the encoder wheel to provide an output signal representative of film velocity in the film gate during winding and unwinding of the film on the take-up spool. It will be appreciated that, since the encoder wheel 60 rotates with the pressure roller 44 which is pressed against the outer circumference of the film on the take-up spool, the angular velocity of the encoder wheel inherently tracks with the velocity of the film in the film gate.

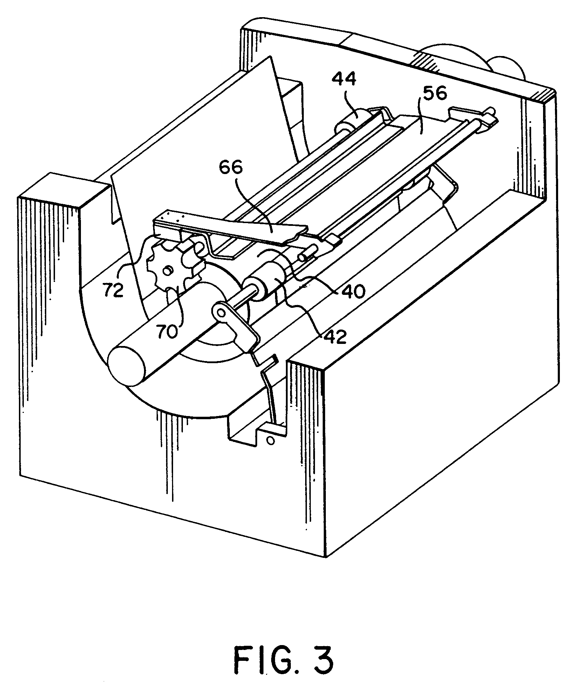

In Fig. 3, an alternative embodiment of the encoder wheel arrangement is shown which is similar to the arrangement of Fig. 2 except that the circumference of the encoder wheel 70 in Fig. 3 is provided with alternating dark and light segments. An optical sensor 72 is mounted on the end of a flexible wiring board 66 to provide the desired encoder pulse output signal.

It will be appreciated that an encoder wheel mounted integrally and coaxially with the pressure roller of the take-up spool provides a simple mechanism for metering the film speed in the camera without requiring additional parts or taking up space in the vicinity of the film gate. Moreover, by virtue of the fact that the pressure roller does not require sprockets to follow along with the film travel, the metering arrangement of this invention is particularly useful with film that has no sprocket holes or which may sprocket holes spaced apart by the distance of an image frame. Thus the metering arrangement of the this invention is useful in providing metering pulses to control the data recording rate on the film and also to determine when the film velocity during frame advance has reached a level at which data can be usefully recorded on the film.

The invention has been described in detail with particular reference to a presently preferred embodiment, but it will be understood that variations and modifications can be effected within the scope of the invention as set forth in the claims appended hereto.

## Claims

1. An improved photographic film camera of the type having a film gate, a motorized film drive, a film take-up spool and a biased pressure roller for pressing film against the take-up spool as film is wound and unwound on the spool, the improvement comprising:
a film velocity encoder wheel integrally mounted coaxially with the pressure roller and rotatable therewith.

2. The camera of claim 1 wherein the encoder wheel is provided with detectable indicia formed directly on the pressure roller.

3. The camera of claim 1 wherein the pressure roller is mounted on a rotatable axle and the encoder wheel is mounted on the axle so as to be rotatable coaxially with the pressure roller.

4. The camera of claim 2 or 3 wherein the encoder wheel includes circumferentially disposed detectable indicia and the improvement further includes sensors responsive to the detectable indicia for producing an output pulse signal representative of film velocity in the camera.

5. The camera of claim 4 in which the output pulse signal is coupled to magnetic recording control circuits to control magnetic recording of data on a magnetic layer disposed on said film.
